# EUROPÄISCHE PATENTSCHRIFT

(11) **EP 0 638 701 B1**
(45) Veröffentlichungstag und Bekanntmachung des Hinweises auf die Patenterteilung: **01.09.1999**
(21) Anmeldenummer: 93115117.9
(22) Anmeldetag: 20.09.1993
(51) Int. Cl.: E05F 15/00

(54) **Einklemmschutz für kraftbetätigte Schliesseinrichtungen**
Antisqueeze safety for driven closure devices
Sécurité anti-pincement pour dispositifs de fermeture motorisés

(30) Priorität: 09.08.1993 DE 4326738; 02.09.1993 DE 4329535
(43) Veröffentlichungstag der Anmeldung: 15.02.1995
(73) Patentinhaber: METZELER Automotive Profiles GmbH, D-88131 Lindau (DE)
(72) Erfinder: Bonné, Andreas, Dipl.-Ing., D-88099 Neukirch (DE); Glagow, Klaus, Dipl.-Ing., D-88142 Wasserburg (DE); Jäger, Sebastian, Dipl.-ing., D-88079 Kressbonn (DE); Weiss, Bernhard, Dr., D-88131 Lindau/Bodensee (DE); Haber, Gyala, Dipl.-Ing., D-88239 Wangen (DE); Schaberick, Jürgen, D-88131 Lindau/Bodensee (DE)
(74) Vertreter: Preissner, Nicolaus, Dipl.-Ing.

(56) Entgegenhaltungen:
- EP-A- 0 015 393
- EP-A- 0 353 332
- EP-A- 0 381 578
- EP-A- 0 383 671
- EP-A- 0 405 351
- EP-A- 0 539 887
- DE-A- 3 724 085
- FR-A- 2 089 278
- US-A- 5 148 911

## Beschreibung

Die Erfindung betrifft einen Einklemmschutz für elektrisch betätigte Fenster und Schiebedächer von Kraftfahrzeugen, mit einem aus einem elastomerem Material extrudierten Hohlprofil, das eine Hohlkammer und zwei voneinander beabstandete elektrische Leiter aufweist, die bei in Kontakt bringen einen Schaltvorgang bezüglich eines Antriebsaggregats der Schließeinrichtung auslösen, wobei die elektrischen Leiter als im Hohlprofil durch Zugabe von leitfähigen Stoffen zum elastomeren Material leitfähige Bereiche ausgebildet sind, wobei ein leitfähiger ebener Basisbereich und ein aufgetzter gewölbter Profilbereich vorgesehen sind, der mit dem Basisbereich die Hohlkammer bildet und der einen Zenitbereich aus leitfähigem Material aufweist, der durch isolierende Profilbereiche von dem Basisbereich getrennt ist.

Ein derartiger Einklemmschutz ist aus der EP 0 405 351 A1 bekannt. Der bekannte Einklemmschutz kommt bei kraftbetätigten Anlagen, wie Rolltoren, Rollgittern, Hebe- und Arbeitsbühnen sowie zur Absicherung von beweglichen Gegenständen zum Einsatz und wird an diesen beweglichen Gegenständen direkt festgelegt. Hierbei kann das Hohlprofil eine Nut mit hinterschnittenen Vorsprüngen aufweisen, die der Festlegung eines anderen gleichartigen Hohlprofils dienen, das mit einer Federaufnahme versehen ist, die mit der Nut zusammenwirkt.

Eine ähnliche Sicherheitskontaktschiene ist aus der EP 0 353 332 A1 bekannt. Die Sicherheitskontaktschiene ist als Hohlprofil mit einer sich in Längsrichtung erstreckenden Hohlkammer ausgebildet, in die eine als leitfähiger Bereich ausgebildete schneidenartige Rippe einragt. Ein gegenüberliegender Bereich des Hohlprofils ist als weiterer leitfähiger Bereich ausgebildet. Hierbei wird die Leitfähigkeit der leitfähigen Bereiche durch Zugabe von leitfähigen Stoffen in das elastomere Material erhalten. Weiterhin ist in den leitfähigen Bereichen jeweils ein metallischer Leiter eingebettet.

In der DE 37 24 085 Al wird ein Einklemmschutz beschrieben, der für den Einsatz an einem Fensterführungsprofil eines Kraftfahrzeugs ausgestaltet ist. Der bekannte Einklemmschutz baut sich aus mehreren Einzelteilen auf, die miteinander verklebt sind. Hierbei wird ein Isoliergummiprofil stirnseitig mit einem leitfähigen Gummiprofil versehen, in das ein Stahldraht eingebettet ist. Das Isoliergummiprofil wird von einem U-förmigen leitfähigen Gummiprofil umfaßt, das an seinen freien Schenkeln mit dem Isoliergummiprofil verklebt ist. In das U-förmige leitfähige Gummiprofil ist ebenfalls ein Stahldraht eingebettet. Das aus den vorstehend aufgeführten Einzelteilen verklebte Bauteil wird wiederum mittels eines Anpassungsprofils mit einer Fensterabdichtung verklebt. Die Klebverbindung der einzelnen Bauteile führt zu einer komplizierten Herstellung des Einklemmschutzes. Weiterhin kann es insbesondere im Dauerbetrieb zur Lösung der einzelnen Klebverbindungen kommen.

Aus der EP 0 381 578 A1 ist ein Einklemmschutz bekannt, der mit einer Fensterrahmendichtung kombiniert ist. Der Einklemmschutz weist koextrudierte leitfähige Bereiche auf, die in der Ausgangsstellung voneinander beabstandet sind. Zur Betätigung des Einklemmschutzes ist eine schwenkbeweglich angeordnete Blende vorgesehen, die den Einklemmschutz umfaßt. Das Einklemmschutzprofil ist separat von dem Fensterrahmenprofil ausgeführt.

In der FR-A 2.089.278 wird ein Einklemmschutz beschrieben, der einem Fensterprofil zugeordnet ist. Der Einklemmschutz baut sich aus einem Basisprofil aus Aluminium auf, an dem ein näherungsweise U-förmiges Gummiprofil festgelegt ist. Innenliegend weist das Gummiprofil ein als Kontakt dienendes Metallband auf. Bei der Betätigung des Einklemmschutzes wird das Metallband an das ebenfalls leitfähige Aluminiumprofil herangeführt.

Der Erfindung liegt die Aufgabe zugrunde, einen Einklemmschutz zu schaffen, der in einfacher Weise herstellbar ist und eine hohe Dauergebrauchstüchtigkeit aufweist.

Diese Aufgabe wird bei einem Einklemmschutz der eingangs genannten Art dadurch gelöst, daß das Hohlprofil einstückig als Koextrudat mit einem Fensterführungsprofil zur Abdichtung und Führung des Fensters ausgebildet ist, wobei das Hohlprofil mit einem seitlichen Schenkel des Fensterführungsprofils verbunden ist und daß in die leitfähigen Bereiche jeweils ein metallischer Leiter durch Koextrusion eingebettet ist.

Die einfache Herstellung des erfindungsgemäßen Einklemmschutzes wird dadurch erreicht, daß er als koextrudierte Profilleiste ausgebildet ist, an der einerseits das als Einklemmschutz wirkende Hohlprofil und andererseits das Dichtungsprofil vorgesehen ist, das die Schließeinrichtung abdichtet. Da die leitfähigen Bereiche durch Einbringen von leitfähigen Stoffen in das elastomere Grundmaterial geschaffen werden, entfällt ein aufwendiges Einbringen von Kontaktstreifen und dergleichen. Auch die in den leitfähigen Bereichen eingebetteten metallischen Leiter werden bei der Koextrusion eingebracht. Darüber hinaus weist der erfindungsgemäße Einklemmschutz eine hohe Dauergebrauchstüchtigkeit auf, da es weder zur Korrosion noch zur Ablösung von eingebrachten metallischen Kontaktstreifen kommen kann. Die in den leitfähigen Profilbereichen vorgesehenen metallischen Leitern sind vollständig eingebettet. Schließlich ist der erfindungsgemäße Einklemmschutz problemlos auch in abgewinkelten Ecken und dergleichen verlegbar.

In prinzipiell bekannter Weise wird beim Eindrücken des Hohlprofils an einer beliebigen Stelle durch die sich ergebende Widerstandsverringerung und Stromerhöhung bei Berührung der leitfähigen Bereiche ein Schaltvorgang zum Umsteuern oder Abstoppen des Antriebsaggregats der Schließeinrichtung ausgelöst.

Vorteilhafte Ausgestaltungen der Erfindung ergeben sich aus den Unteransprüchen.

In vorteilhafter Ausgestaltung setzt sich der nicht leitende Gummi des Schenkels unmittelbar als Umhüllung des leitfähigen Basisbereichs fort. Hierdurch wird eine elektrische Isolierung des leitfähigen Basisbereichs erzielt.

Vorteilhaft weisen die leitfähigen Bereiche auf der Innenseite der Hohlkammer jeweils einen in die Hohlkammer ragenden Ansatz auf.

In weiterer vorteilhafter Ausgestaltung sind in abknickenden Eckbereichen des Profilbereichs die aneinander grenzenden Enden der Hohlprofile auf einen entsprechend abgewinkelten Einlegekontakt mit dem Querschnitt der Hohlkammer aufgeschoben, wobei der Einlegkontakt ober- und unterseitig leitende Schichten aufweist, die mittig von einer isolierenden Schicht getrennt sind.

Bezüglich eines Anschlußkontakt für den elektrischen Anschluß hat es sich als vorteilhaft herausgestellt, daß dieser an einem Ende einen Querschnitt entsprechend der Hohlkammer des Hohlprofils aufweist und am anderen Ende in ein blockförmiges Endstück übergeht, aus dem zwei Kontaktstifte herausragen und daß der Anschlußkontakt ober- und unterseitig leitende Schichten aufweist, die mittig von einer isolierenden Schicht getrennt sind.

Bei einer anderen Ausgestaltung eines Anschlußkontakts wird vorgeschlagen, daß dieser an einem Ende einen Querschnitt entsprechend der Hohlkammer des Hohlprofils aufweist und am anderen Ende in ein blockförmiges Endstück übergeht, aus dem zwei Kontaktstifte herausragen, wobei das blockförmige Endstück auf seiner Rückseite zwei Kontaktspitzen aufweist, die mit den metallischen Leitern in Kontakt stehen.

Vorteilhaft werden als leitfähige Stoffe Ruße, Graphit oder Metallpulver eingesetzt.

Nachfolgend wird die Erfindung unter Bezugnahme auf die Zeichnung näher erläutert. Dabei zeigen:
- Figur 1: die schematisierte Seitenansicht eines Kraftfahrzeugs mit den zu schützenden Bereichen;
- Figur 2: einen Querschnitt durch ein Hohlprofil mit zwei leitfähigen Bereichen in vereinfachter nicht erfindungsgemäßer Anordnung;
- Figur 3: eine Ausgestaltung des Hohlprofils gemäß Figur 2;
- Figur 4: einen Querschnitt durch eine nicht erfindungsgemäße getrennte Anordnung des Hohlprofils in bezug auf das Fensterführungsprofil;
- Figur 5: einen Querschnitt durch eine erfindungsgemäße Ausbildung von Hohlprofil und Fensterführungsprofil;
- Figur 6: eine Aufsicht auf eine Eckverbindung;
- Figur 7: eine perspektivische Ansicht eines solchen Einlegekontakts für eine Eckverbindung;
- Figur 8: eine Aufsicht auf einen Anschlußkontakt;
- Figur 9: eine perspektivische Ansicht eines solchen Anschlußkontakts;
- Figur 10: eine Seitenansicht eines Anschlußkontakts für ein Hohlprofil mit elektrischen Leitern; und
- Figur 11: eine Vorderansicht dieses Anschlußkontakts.

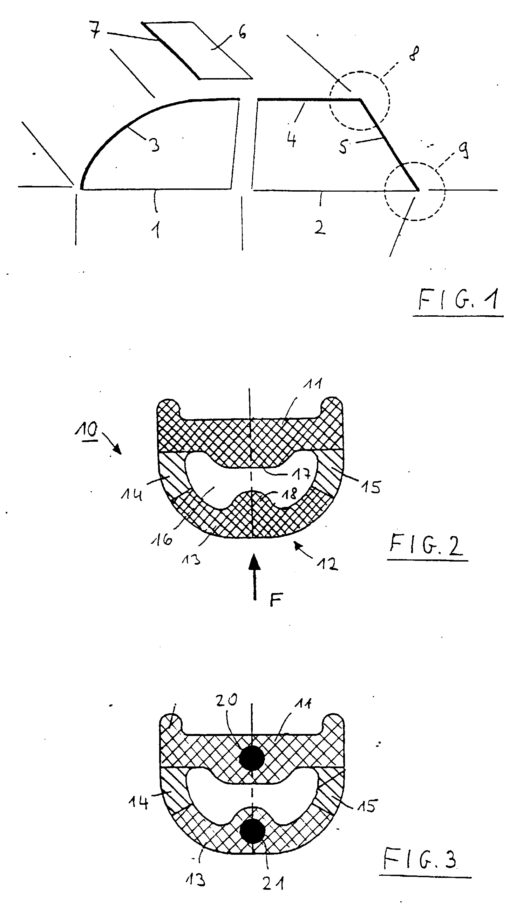

In Figur 1 ist schematisch die Seitenansicht eines Kraftfahrzeugs im Bereich von Vordertür 1 und Hintertür 2 dargestellt. Mit einem Einklemmschutz sind insbesondere der Bereich 3, nämlich der Bereich A-Säule der Vordertür, der Bereich 4, nämlich am Dach der Hintertür 2 sowie der Bereich 5 an der C-Säule der Hintertür anzuordnen. Zusätzlich ist es auch möglich, bei einem Schiebedach 6 die Vorderkante 7 entsprechend zu schützen sowie auch die Seitenkanten und gegebenenfalls die Hinterkante in den Schutz einzubeziehen.

In Figur 2 ist ein solcher nicht erfindungsgemäßer Einklemmschutz zur prinzipiellen Erläuterung der Funktionsweise in vereinfachter Darstellung gezeigt. Das entsprechende Hohlprofil 10 weist einen ebenen Basisbereich 11 aus leitfähigem Material und einen auf die Ränder des ebenen Basisbereichs 11 aufgesetzten, etwa halbkreisförmigen Profilbereich 12, dessen Zenitbereich 13 ebenfalls aus leitfähigem Material besteht, wobei dieser leitfähige Bereich 13 über zwei Bereiche 14 und 15 aus nichtleitendem Material vom Basisbereich 11 getrennt ist.

Die Profilbereiche 11 und 12 schließen dabei eine Hohlkammer 16 ein, wobei auf der Innenseite der Hohlkammer 16 die leitfähigen Bereiche 11 und 13 jeweils einen elektrisch leitenden Ansatz 17 und 18 aufweisen.

Als Material für dieses Hohlprofil 10 können Elastomere, thermoplastische Elastomere oder Thermoplaste benutzt werden, wobei die Leitfähigkeit der leitenden Bereiche 11 und 13 durch Beigabe von leitfähigen Stoffen, wie Rußen, Graphit oder Metallpulver zum Grundmaterial herstellbar ist.

Bei Einwirken einer Kraft F und einem Eindrücken des gewölbten Profilbereichs 12 an einer beliebigen Stelle entlang des Profils wird dann bei Berührung der leitfähigen Ansätze 17 und 18 sich eine Widerstandsverringerung und damit eine Stromerhöhung in den leitenden Bereichen 11 und 13 ergeben, so daß damit ein Schaltvorgang zum Umsteuern oder Abstoppen eines Antriebsaggregats ausgelöst wird.

Figur 3 zeigt ein anderes Hohlprofil in nicht erfindungsgemäßer Anordnung, bei dem in die leitenden Profilbereiche 11 und 13 metallische Leiter 20 und 21 eingebettet sind, was bei der Koextrusion erfolgt. Durch diese metallischen Leiter 20 und 21 kann der elektrische Durchgangswiderstand des Gesamtsystems weiter gesenkt werden. Für den Gesamtwiderstand ist beim Zusammendrücken des Profils an beliebiger Stelle nur noch der Übergangswiderstand zwischen den metallischen Leitern 20 und 21 und dem dazwischenliegenden leitfähigen Material von maßgebendem Einfluß.

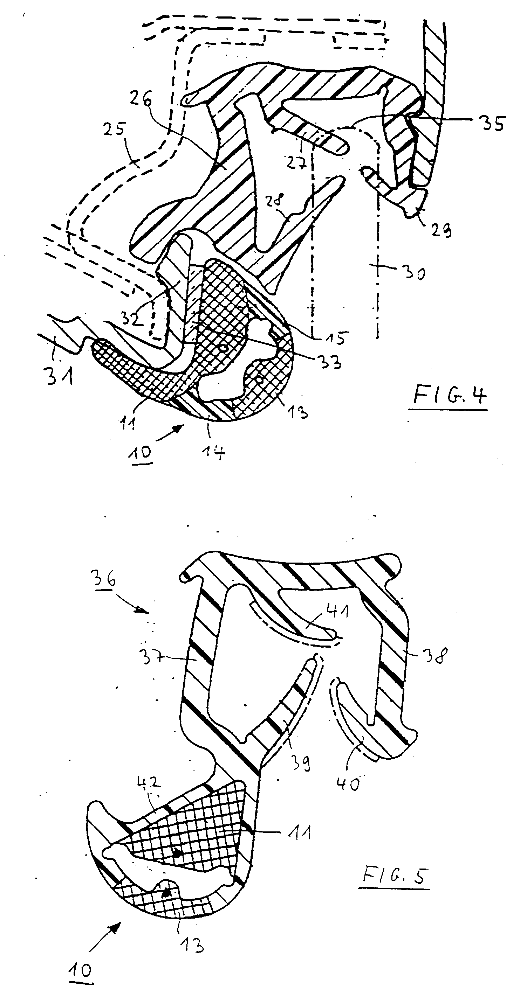

In Figur 4 ist die mögliche Anordnung eines solchen Hohlprofils im Bereich der Scheibe in gesonderter nicht erfindungsgemäßer Anordnung und getrennt von anderen Profilen gezeigt. Figur 4 dient der prinzipiellen Erläuterung der Funktionsweise eines Einklemmschutzes bei einem Fensterführungsprofil 26. Wie man aus der schematischen Zeichnung ersieht, ist innerhalb des oberen Türrahmens 25 das obere Fensterführungsprofil 26 eingeknöpft, das mit beispielsweise drei Dichtlippen 27, 28 und 29 die nach oben auffahrende Scheibe 30 aufnimmt und abdichtet.

An einer den unteren Rand des Rahmens 25 umschließenden Kunststoffverkleidung 31 ist auf einem nach oben aufragenden Schenkel 32 über ein Klebeband 33 das eigentliche Hohlprofil 10 mit seinen leitenden Bereichen 11 und 13 sowie den nichtleitenden Bereichen 14 und 15 gezeigt.

Mit einer solchen Anordnung ist sichergestellt, daß z. B. bei einer auf dem oberen Rand 35 der Scheibe 30 aufliegenden Hand beim elektrischen Hochfahren der Scheibe 30 die Hand zunächst mit dem Hohlprofil 10 in Berührung kommt und hierbei den leitenden Bereich 13 auf den leitenden Basisbereich 11 aufdrückt und damit einen entsprechenden Kontakt zum Anhalten des Fensterantriebs bewirkt.

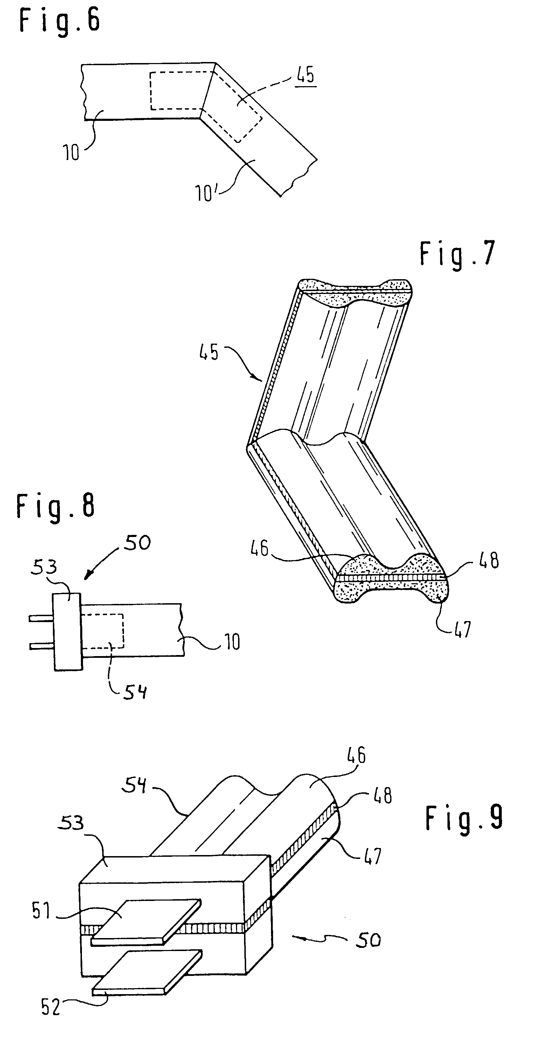

Figur 5 zeigt eine erfindungsgemäße Anordnung mit einem Dichtungsprofil 36, das einstückig mit dem Hohlprofil 10 ausgebildet ist. Das dargestellte Fensterführungsprofil mit seinen beiden seitlichen Schenkeln 37 und 38 und den Dichtlippen 39 und 40 bzw. 41 ist am freien Ende des innenliegenden Schenkels 37 direkt mit einer Ecke des Hohlprofils 10 verbunden und einstückig mit diesem extrudiert. Dabei setzt sich der nichtleitende Gummi des Schenkels 37 unmittelbar als Umhüllung 42 des leitenden Bereichs 11 des Hohlprofils 10 fort.

In Analogie zu dem dargestellten Ausführungsbeispiel nach Figur 5 kann das Hohlprofil auch mit jedem anderen Funktionsprofil am Kraftfahrzeug einstückig ausgebildet sein.

In Figur 6 ist eine Eckverbindung von winklig aufeinanderstoßenden Hohlprofilen 10 und 10' dargestellt. In die auf Gehrung geschnittenen Enden dieser Hohlprofile ist ein Einlegekontakt 45 eingeschoben, wie er im einzelnen in Figur 7 in perspektivischer Ansicht schräg von unten näher dargestellt ist.

Dieser Einlegekontakt 45 weist dabei einen Querschnitt auf, wie er der Hohlkammer 16 des Hohlkammerprofils 10 entspricht und verläuft dabei im gleichen Winkel wie die beiden aufeinanderstoßenden Hohlprofile 10 und 10'. Dieser Einlegekontakt 45 weist eine obere Schicht 46 und eine untere Schicht 47 aus leitendem Material auf, die durch eine isolierende Schicht 48 voneinander getrennt sind. Wegen der an die Hohlkammer angepaßten Außenkontur dieses Einlegekontakts 45 ist eine kontaktsichere Verbindung zwischen zwei solchen Hohlprofilabschnitten sicher gewährleistet. Üblicherweise werden dabei die Hohlprofile 10 und 10' auf den Einlegekontakt 45 aufgesteckt und mit einer isolierenden Gummimischung, einem isolierenden thermoplastischen Elastomer oder einem isolierenden Thermoplast überspritzt. Gegebenenfalls reicht es auch aus, daß die Profile einfach auf den Einlegekontakt 45 aufgesteckt oder aufgeklebt werden.
In Figur 8 ist ein elektrischer Anschlußkontakt 50 für das Ende eines Hohlprofils 10 dargestellt, wie er im Bereich 9 entsprechend Figur 1 Verwendung findet.

Der Aufbau eines solchen Anschlußkontakts 50 entsprechend Figur 8, wie er im einzelnen in Figur 9 dargestellt ist, entspricht im wesentlichen dem Einlegekontakt nach Figur 7, in dem ein in das Hohlprofil 10 einzuschiebender Bereich 54 mit einer Außenkontur vorgesehen ist, der der Innenkontur des Hohlkanals 16 entspricht und aus einer oberen leitenden Schicht 46, einer unteren leitenden Schicht 47 und einer zwischengeschalteten isolierenden Schicht 48 besteht. Am außerhalb des Hohlprofils 10 liegenden Bereich dieses Anschlußkontakts 50 geht dieser in ein blockförmiges Endstück 53 gleichen Schichtaufbaus wie der einzuschiebende Bereich 54 auf, aus dem zwei Kontaktstifte 51 und 52 zum Anschluß an die Antriebsleitungen herausragen.

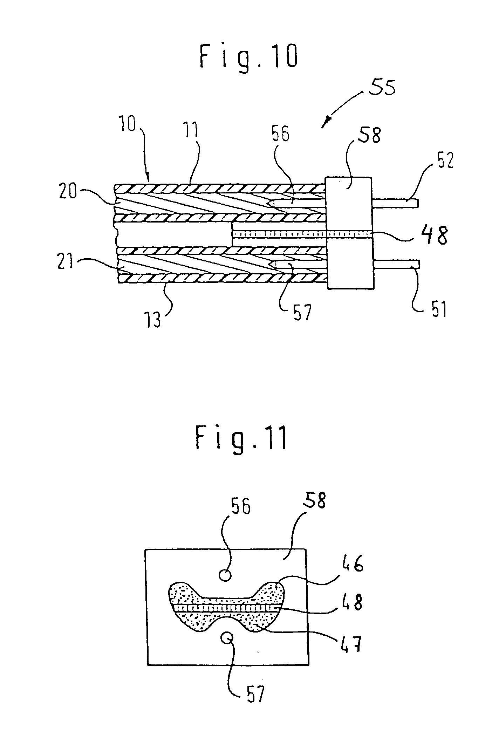

Bei einem Hohlprofil 10 mit zwei innenliegenden elektrischen Leitern 20 und 21 ist entsprechend den Figuren 10 und 11 ein Anschlußkontakt 55 vorzusehen, der im Prinzip den gleichen Aufbau wie der Anschlußkontakt nach den Figur 8 und Figur 9 aufweist, bei dem jedoch vom blockförmigen Endstück 58 auf dessen Rückseite zwei Kontaktspitzen 56 und 57 ausgehen, die sich an die Leiter 20 und 21 gutleitend anlegen und damit einen sicheren Kontakt bilden.

Insgesamt ist also ein Einklemmschutz geschaffen, der sehr einfach aufgebaut ist und eine große Variationsmöglichkeit der Gestaltung und des Einbaus ermöglicht.

## Patentansprüche

1. Einklemmschutz für elektrisch betätigte Fenster und Schiebedächer von Kraftfahrzeugen, mit einem aus einem elastomeren Material extrudierten Hohlprofil (10), das eine Hohlkammer und zwei voneinander beabstandete elektrische Leiter aufweist, die bei Inkontaktbringen einen Schaltvorgang bezüglich eines Antriebsaggregats der Schließeinrichtung auslösen, wobei die elektrischen Leiter als im Hohlprofil (10) durch Zugabe von leitfähigen Stoffen zum elastomeren Material leitfähige Bereiche (11, 12) ausgebildet sind, wobei ein leitfähiger ebener Basisbereich (11) und ein aufgesetzter gewölbter Profilbereich (12) vorgesehen sind, der mit dem Basisbereich (11) die Hohlkammer bildet und der einen Zenitbereich (13) aus leitfähigem Material aufweist, der durch isolierende Profilbereiche (14, 15) von dem Basisbereich (11) getrennt ist, dadurch gekennzeichnet, daß das Hohlprofil (10) einstückig als Koextrudat mit einem Fensterführungsprofil (36) zur Abdichtung und Führung des Fensters ausgebildet ist, wobei das Hohlprofil (10) mit einem seitlichen Schenkel (37) des Fensterführungsprofils (36) verbunden ist und daß in die leitfähigen Bereiche (11,12) jeweils ein metallischer Leiter (20, 21) durch Koextrusion eingebettet ist.

2. Einklemmschutz nach Anspruch 1, dadurch gekennzeichnet, daß sich der nicht leitende Gummi des Schenkels (37) unmittelbar als Umhüllung (42) des leitfähigen Basisbereichs (11) fortsetzt.

3. Einklemmschutz nach Anspruch 1 oder 2, dadurch gekennzeichnet, daß auf der Innenseite der Hohlkammer die leitfähigen Bereiche (11, 13) jeweils einen in die Hohlkammer ragenden Ansatz aufweisen.

4. Einklemmschutz nach einem oder mehreren der vorhergehenden Ansprüche, dadurch gekennzeichnet, daß in abknickenden Eckbereichen (8) des Profilbereichs die aneinander grenzenden Enden der Hohlprofile (10, 10') auf einen entsprechend abgewinkelten Einlegekontakt mit dem Querschnitt der Hohlkammer aufgeschoben sind und daß der Einlegekontakt (45) ober- und unterseitig leitende Schichten (46, 47) aufweist, die mittig von einer isolierenden Schicht (48) getrennt sind.

5. Einklemmschutz nach einem der vorhergehenden Ansprüche, dadurch gekennzeichnet, daß ein Anschlußkontakt (50) für den elektrischen Anschluß vorgesehen ist, der an einem Ende einen Querschnitt entsprechend der Hohlkammer des Hohlprofils (10) aufweist und am anderen Ende in ein blockförmiges Endstück (53) übergeht, aus dem zwei Kontaktstifte (51, 52) herausragen und daß der Anschlußkontakt (50) ober- und unterseitig leitende Schichten (46, 47) aufweist, die mittig von einer isolierenden Schicht (48) getrennt sind.

6. Einklemmschutz nach einem der Ansprüche 1 bis 4, dadurch gekennzeichnet, daß ein Anschlußkontakt (55) für den elektrischen Anschluß vorgesehen ist, der an einem Ende einen Querschnitt entsprechend der Hohlkammer des Hohlprofils (10) aufweist und am anderen Ende in ein blockförmiges Endstück (58) übergeht, aus dem zwei Kontaktstifte (51, 52) herausragen und daß das blockförmige Endstück (58) auf seiner Rückseite zwei Kontaktspitzen (56, 57) aufweist, die mit den metallischen Leitern (21, 22) des Hohlprofils (10) in Kontakt stehen.

7. Einklemmschutz nach einem der vorhergehenden Ansprüche, dadurch gekennzeichnet, daß als leitfähige Stoffe Ruße, Graphit oder Metallpulver verwendet werden.

## Claims

1. A trapping protector for electric-powered windows and sunroofs on motor vehicles including an extruded elastomer hollow profile (10) comprising a hollow chamber and two electrical conductors spaced away from each other which on being brought into contact activate a switching action as regards a drive assembly of the closing device, said electrical conductors being configured as conductive portions (11, 12) in said hollow profile (10) by the addition of conductive substances to said elastomer material, a conductive flat base portion (11) and a mounted curved profile portion (12) being provided, forming with said base portion (11) said hollow chamber and comprising a zenith portion (13) of conductive material separated by insulating profile portions (14, 15) from said base portion (11), characterized in that said hollow profile (10) is configured integrally as a coextrudate with a window guide profile (36) for sealing and guiding said window, said hollow profile (10) being connected to a side leg of said window guide profile (36) and further characterized in that a metallic conductor (20, 21) is embedded by coextrusion in each conductive portion (11, 12).

2. The trapping protector as set forth in claim 1, characterized in that said non-conductive rubber of said leg (37) is directly continued as the sheathing (42) of said conductive base portion (11).

3. The trapping protector as set forth in claim 1 or 2, characterized in that on the inner side of said hollow chamber each of said conductive portions (11, 12) comprises a protuberance jutting into said hollow chamber.

4. The trapping protector as set forth in any of the preceding claims, characterized in that in downswept corner portions (8) of said profile portion the juxtaposing ends of said hollow profiles (10, 10') are slip-mounted on a correspondingly downswept insertion contact with said cross-section of said hollow chamber and in that said insertion contact (45) comprises on its upper and lower sides conductive layers (46, 47) separated in the middle by an insulating layer (48).

5. The trapping protector as set forth in any of the preceding claims, characterized in that a terminal contact (50) is provided for said electric connection comprising at one end a cross-section corresponding to that of said hollow chamber of said hollow profile (10) and translating at the other end into a block-shaped end piece (53) from which two contact pins (51, 52) protrude and in that said terminal contact (50) comprises on its upper and lower sides conductive layers (46, 47) separated in their middle by an insulating layer (48).

6. The trapping protector as set forth in any of the claims 1 to 4, characterized in that a terminal contact (55) is provided for said electric connection comprising at one end a cross-section corresponding to that of said hollow chamber of said hollow profile (10) and translating at the other end into a block-shaped end piece (58) from which two contact pins (51, 52) protrude and in that said block-shaped end piece (58) comprises on its rear side two contact tips (56, 57) in contact with said metallic conductors (21, 22) of said hollow profile (10).

7. The trapping protector as set forth in any of the preceding claims, characterized in that carbon black, graphite or metal powder is employed as conductive substances.

## Revendications

1. Protection anti-pincement pour fenêtres et toits ouvrants à fonctionnement électrique dans des véhicules automobiles, comprenant un profilé creux extrudé (10) en matériau élastomère, qui présente une chambre creuse et deux conducteurs électriques disposés à distance l'un de l'autre, qui déclenchent lors d'une venue en contact une opération de commutation concernant une unité d'entraînement du dispositif de fermeture, les conducteurs électriques étant réalisés sous forme de zones conductrices (11, 12) dans le profilé creux (10) par apport de matériau conducteur sur le matériau élastomère, de manière à prévoir une zone de base conductrice plane (11) et une zone profilée bombée (12) posée par-dessus, laquelle forme la chambre creuse avec la zone de base (11), et qui comporte une zone de sommet (13) en matériau conducteur, séparée de la zone de base (11) par des zones de profilé isolantes (14, 15), caractérisée en ce que le profilé creux (10) est réalisé d'une seule pièce par coextrusion avec un profilé de guidage de fenêtre (36) destiné à étancher et à guider la fenêtre, ledit profilé creux (10) étant relié à une branche latérale (37) du profilé de guidage de fenêtre (36), et en ce qu'il est prévu un fil métallique respectif (20, 21) noyé par coextrusion dans les zones conductrices (11, 12).

2. Protection anti-pincement entre selon la revendication 1, caractérisée en ce que le caoutchouc non-conducteur de la branche (37) se poursuit directement sous forme d'enveloppe (42) de la zone de base conductrice (11).

3. Protection anti-pincement selon l'une ou l'autre des revendications 1 et 2, caractérisée en ce que du côté intérieur de la chambre creuse, les zones conductrices (11, 13) présentent respectivement un talon qui dépasse dans la chambre creuse.

4. Protection anti-pincement selon l'une ou plusieurs des revendications précédentes, caractérisée en ce que dans les zones de coin coudées (8) de la zone profilée, les extrémités mutuellement adjacentes des profilés creux (10, 10') sont enfilées sur un contact d'engagement à coudage correspondant qui présente la section de la chambre creuse, et en ce que le contact d'engagement (45) comporte du côté supérieur et du côté inférieur des couches conductrices (46, 47), lesquelles sont séparées au centre par une couche isolante (48).

5. Protection anti-pincement selon l'une des revendications précédentes, caractérisée en ce qu'il est prévu un contact à borne (50) pour le raccordement électrique, lequel présente à une extrémité une section qui correspond à la chambre creuse du profilé creux (10) et se transforme à l'autre extrémité en une pièce terminale (53) en forme de bloc, de laquelle dépassent deux tiges de contacts (51, 52), et en ce que le contact à borne (50) présente du côté supérieur et du côté inférieur des couches conductrices (46, 47), lesquelles sont séparées au centre par une couche isolante (48).

6. Protection anti-pincement selon l'une des revendications 1 à 4, caractérisée en ce qu'il est prévu un contact à bornes (55) pour le raccordement électrique, lequel présente à une extrémité une section qui correspond à la chambre creuse du profilé creux (10) et se transforme à l'autre extrémité en une pièce terminale (58) en forme de bloc, de laquelle dépassent deux tiges de contact (51, 52), et en ce que la pièce terminale (58) en forme de bloc présente sur sa face postérieure deux pointes de contact (56, 57), qui sont en contact avec les conducteurs métalliques (21, 22) du profilé creux (10).

7. Protection anti-pincement selon l'une des revendications précédentes, caractérisée en ce que l'on utilise comme produit conducteur du noir de carbone, du graphite, ou une poudre de métal.
